# EUROPÄISCHE PATENTANMELDUNG

(11) **EP 1 128 681 A1**
(43) Veröffentlichungstag der Anmeldung: **29.08.2001**
(21) Anmeldenummer: 01440035.2
(22) Anmeldetag: 19.02.2001
(51) Int. Cl.: H04Q 3/00

(54) **Vorrichtung und Verfahren zur Fernabfrage und/oder Fernsteuerung einer Gebäudefunktion**

(30) Priorität: 26.02.2000 DE 10009109
(71) Anmelder: ALCATEL, 75008 Paris (FR)
(72) Erfinder: Frohberg, Wolfgang, Dr., 70439 Stuttgart (DE)
(74) Vertreter: Wörz, Volker Alfred

(57) **Zusammenfassung**

Die Erfindung betrifft eine Vorrichtung (1) und ein Verfahren zur Fernabfrage und/oder Fernsteuerung einer Gebäudefunktion (4, 5, 6, 7) durch einen Teilnehmer von einem Endgerät (12, 13, 19, 23) aus über ein Telekommunikationsnetz (2). Damit die Fernabfrage und/oder Fernsteuerung der Gebäudefunktionen (4, 5, 6, 7) dahingehend zu verbessern, dass sie von beliebigen Endgeräten (11, 12, 13, 19, 23) über beliebige Telekommunikationsnetze (2, 17, 18) ausgeführt werden kann und dass die Eingabe von Abfrage- bzw. Steuerbefehlen vereinfacht und die Ausgabe des Ergebnisses einer Fernabfrage auf dem Endgerät (12, 13, 19, 23) übersichtlicher bzw. besser verständlich wird, wird vorgeschlagen, dass das Telekommunikationsnetz (2) einerseits mit einem Intelligenten Netz (14) und andererseits mit einer Steuereinrichtung (8) für die Gebäudefunktion (4, 5, 6, 7) in Verbindung steht. Das Intelligente Netz (14) verwaltet das von dem Teilnehmer derzeit benutzten Telekommunikationsnetzes (2, 17, 18) und die Adresse, unter der der Teilnehmer derzeit erreichbar ist. Außerdem konvertiert das Intelligente Netz (14) zwischen dem Endgerät (11, 12, 13, 19, 23) und der Steuereinrichtung (8) der Gebäudefunktion (4, 5, 6, 7) übertragene Daten zwischen einem Datenformat der Steuereinrichtung (8) und einem Datenformat des Endgeräts (11, 12, 13, 19, 23).

## Beschreibung

Die vorliegende Erfindung betrifft eine Vorrichtung und ein Verfahren zur Fernabfrage und/oder Fernsteuerung einer Gebäudefunktion durch einen Teilnehmer von einem Endgerät aus über ein Telekommunikationsnetz.

Unter dem Schlagwort "Gebäudemanagement" ist in den letzten Jahren eine zunehmende Vernetzung von Gebäudefunktionen zu beobachten. Die Gebäudefunktionen umfassen die Aufnahme von Informationen (z.B. der Außentemperatur, der Innenraumtemperatur in verschiedenen Räumen, der Temperatur eines Heizkessels, des Stromverbrauchs einzelner Geräte oder des gesamten Gebäudes, Ort und Anzahl der geöffneten Fenster, Ort, Anzahl und Heizstufe der eingeschalteten Heizkörper, aktueller Wasserverbrauch eines Gerätes oder des gesamten Gebäudes). Die Aufnahme dieser Informationen erfolgt üblicherweise über geeignete Sensoren. Die Gebäudefunktionen umfassen aber auch das Ausführen bestimmter Handlungen (z.B. Nachtabschaltung des Heizkessels, Aktivierung/Deaktivierung ausgewählter Heizkörper, Aktivierung/Deaktivierung ausgewählter Leuchten, Aktivierung/Deaktivierung ausgewählter Geräte). Das Ausführen bestimmter Handlungen erfolgt üblicherweise über geeignete Aktoren. Die Gebäudefunktionen werden zeitabhängig und/oder ereignisabhängig aufgerufen. Die einzelnen Gebäudefunktionen beeinflussen sich untereinander und ermöglichen so die Optimierung der Gebäudefunktionen, insbesondere hinsichtlich eines möglichst resourcenschonenden Betriebs des Gebäudes (z. B. automatische Aktivierung eines Heizkörpers, des Lichts oder anderer Funktionen beim Betreten eines Raums und automatische Deaktivierung der Funktionen nach dem Verlassen des Raums). Die Gebäudefunktionen werden dabei von einer zentralen Steuereinrichtung koordiniert.

Aus dem Stand der Technik ist es bekannt, eine Fernabfrage und/oder eine Fernsteuerung der Gebäudefunktionen von einem Endgerät aus über ein Telekommunikationsnetz auszuführen. Voraussetzung dafür ist, dass die Steuereinrichtung für die Gebäudefunktionen wie ein herkömmliches Endgerät an das Telekommunikationsnetz angeschlossen ist. Das Telekommunikationsnetz ist bspw. als ein Telefonnetz ausgebildet. Das Telefonnetz kann digital (z. B. als ein Integrated-Services-Digital-Network (ISDN)) oder analog ausgebildet sein. Zur Fernabfrage und/oder Fernsteuerung wählt sich ein Teilnehmer über das Endgerät in die Steuereinrichtung ein. Der Teilnehmer gibt die gewünschten Abfrage- oder Steuerbefehle in einem für die Steuereinrichtung verständlichen Datenformat in das Endgerät ein. Die Eingabe der Abfrage- bzw. Steuerbefehle erfolgt bspw. menügeführt mittels Spracheingabe oder mittels Tastatureingabe nach dem Dial-Tone-Multiple-Frequence (DTMF)-Verfahren. Die Steuereinrichtung führt die Abfrage- bzw. Steuerbefehle aus und fragt im Rahmen einer Fernabfrage bspw. einen Sensorzustand einer Gebäudefunktion ab, empfängt diesen und übermittelt ihn an das Endgerät. Die Ausgabe des Ergebnisses der Fernabfrage in dem Endgerät erfolgt nach dem Stand der Technik entweder über Sprachausgabe (z.B. auf einem Telefon) oder über Textausgabe (z.B. auf dem Bildschirm eines Computers, der auf das Telekommunikationsnetz Zugriff hat). Ebenso kann die Steuereinrichtung im Rahmen einer Fernsteuerung einer Gebäudefunktion einen bestimmten der Gebäudefunktion zugeordneten Aktor veranlassen, eine gewünschte Handlung auszuführen.

Bei der aus dem Stand der Technik bekannten Fernabfrage und/oder Fernsteuerung einer Gebäudefunktion ist es nachteilig, dass die Fernabfrage bzw. Fernsteuerung lediglich über ein an ein Telekommunikationsnetz angeschlossenes Endgerät erfolgen kann. Zudem sind die Möglichkeiten der Eingabe von Abfrage- bzw. Steuerbefehlen und die Möglichkeiten der Anzeige des Ergebnisses einer Fernabfrage auf dem Endgerät sehr beschränkt und für den Teilnehmer nicht sehr komfortabel.

Es ist deshalb eine Aufgabe der vorliegenden Erfindung, die Fernabfrage und/oder Fernsteuerung von Gebäudefunktionen dahingehend zu verbessern, dass sie von beliebigen Endgeräten über beliebige Telekommunikationsnetze ausgeführt werden kann und dass die Eingabe von Abfrage-bzw. Steuerbefehlen vereinfacht und die Ausgabe des Ergebnisses einer Fernabfrage auf dem Endgerät übersichtlicher bzw. besser verständlich wird.

Zur Lösung dieser Aufgabe schlägt die Erfindung ausgehend von der Vorrichtung zur Fernabfrage und/oder Fernsteuerung der eingangs genannten Art vor, dass das Telekommunikationsnetz einerseits mit einem Intelligenten Netz und andererseits mit einer Steuereinrichtung für die Gebäudefunktion in Verbindung steht.

Vorteilhafterweise steht das Intelligente Netz mit weiteren Telekommunikationsnetzen mit weiteren Endgeräten zur Fernabfrage und/oder Fernsteuerung der Gebäudefunktion in Verbindung.

Die zur Fernabfrage und/oder Fernsteuerung notwendigen Funktionen sind zwischen dem Endgerät und dem Intelligenten Netz verteilt. Ein Intelligentes Netz ist dem Telekommunikationsnetz übergeordnet. Das Intelligente Netz weist einen Server (Service-Control-Point, SCP) und eine sogenannte Intelligente Peripherie (Intelligent Peripheral) auf. Das Intelligente Netz wird aufgrund bestimmter Ereignisse beim rufenden Teilnehmer in den Verbindungsaufbau und die Behandlung der Verbindung einbezogen. Das Intelligente Netz schafft als übergeordnetes Netz die Voraussetzungen dafür, dass auf die Steuereinrichtung von einem beliebigen Endgerät aus einem beliebigen Telekommunikationsnetz zugegriffen werden kann.

Mit der erfindungsgemäßen Vorrichtung kann die Funktionalität der Fernabfrage bzw. Fernsteuerung einer Gebäudefunktion entscheidend erweitert werden. Es ist bspw. denkbar, dass die Abfrage- bzw. Steuerbefehle in einem für den Teilnehmer besonders komfortablen Datenformat über das Endgerät eingegeben und im Intelligenten Netz dann in ein für die Steuereinrichtung verständliches Datenformat umgewandelt werden. Außerdem kann das Ergebnis einer Fernabfrage durch das Intelligente Netz in einer für den Teilnehmer besonders übersichtlichen und verständlichen Form aufbereitet und über das Endgerät an den Teilnehmer ausgegeben werden.

Erfindungsgemäß kann nun von einem geeigneten Endgerät aus (Personalcomputer (PC), Personal-Digital-Assistent (PDA), Wireless-Application-Protocoll (WAP)-fähiges Mobiltelefon, etc.) bspw. über das Internet auf das Intelligente Netz zugegriffen und eine Fernabfrage und/oder Fernsteuerung der Gebäudefunktion durchgeführt werden. Ebenso kann von einem geeigneten Endgerät (Mobiltelefon, PC oder PDA mit Mobilfunk-Funktion, etc.) über ein Mobilfunknetz auf das Intelligente Netz zugegriffen werden. Schließlich kann nach wie vor von einem geeigneten Endgerät aus (Telefongerät, PC oder PDA mit Telefonfunktion) auch über das Telekommunikationsnetz aus auf das Intelligente Netz zugegriffen werden.

Gemäß einer vorteilhaften Weiterbildung der vorliegenden Erfindung wird vorgeschlagen, dass das Intelligente Netz den Aufbau einer Kommunikationsverbindung zwischen dem Endgerät und der Steuereinrichtung für die Gebäudefunktion über die heterogene Telekommunikationsnetz-Struktur veranlasst. Die heterogene Telekommunikationsnetz-Struktur umfasst zumindest das Intelligente Netz und beliebige Telekommunikationsnetze, z. B. ein Telefonnetz, das Internet oder ein Intranet. Gemäß dieser Weiterbildung wählt der Teilnehmer von dem Endgerät aus über ein Telekommunikationsnetz den Server des Intelligenten Netzes an. Dann werden die Abfrage- bzw. Steuerbefehle von dem Endgerät zu dem Server des Intelligenten Netzes übermittelt. In dem Server bzw. der Intelligenten Peripherie des Intelligenten Netzes werden die übermittelten Befehle verarbeitet und ausgewertet. Falls erforderlich, veranlasst das Intelligente Netz dann den Aufbau einer Kommunikationsverbindung über das Telekommunikationsnetz zu der Steuereinrichtung und übermittelt die Befehle an die Steuereinrichtung. Die Steuereinrichtung führt eine den Befehlen entsprechende Handlung aus, d. h. ermittelt ein Sensorsignal oder betätigt einen Aktor entsprechend.

Gemäß einer weiteren bevorzugten Ausführungsform der vorliegenden Erfindung wird vorgeschlagen, dass das Intelligente Netz Mittel zum Verwalten des von dem Teilnehmer derzeit benutzten Telekommunikationsnetzes und zum Verwalten der Adresse aufweist, unter der der Teilnehmer derzeit erreichbar ist. Das Intelligente Netz verfolgt also die aktuelle Position des Teilnehmers. Die Angaben über die Erreichbarkeit des Teilnehmers werden in dem Intelligenten Netz gespeichert, um eine möglichst rasche Erreichbarkeit des Teilnehmers sicherzustellen. Bei der Übermittlung des Zustands bestimmter Gebäudefunktionen, bspw. der Alarmanlage, kann eine möglichst rasche Benachrichtigung des Teilnehmers von großer Bedeutung sein.

Gemäß einer anderen vorteilhaften Weiterbildung der vorliegenden Erfindung weist das Intelligente Netz Mittel zur Konvertierung der zwischen dem Endgerät und der Steuereinrichtung der Gebäudefunktion übertragenen Daten zwischen einem Datenformat der Steuereinrichtung und einem Datenformat des Endgeräts auf. Neben einer technisch bedingten Schnittstellenfunktion können die Mittel zur Konvertierung der Daten die übertragenen Daten auch zwischen einem benutzerfreundlichen Datenformat für das Endgerät und einem auf das wesentliche reduzierten Datenformat für die Steuereinrichtung der Gebäudefunktion umwandeln. Das benutzerfreundliche Datenformat ermöglicht bspw. eine Eingabe von Abfrage- bzw. Steuerbefehlen über eine selbsterklärende Menüstruktur auf dem Bildschirm eines Computers oder eine Aufbereitung der Abfrageergebnisse der Gebäudefunktion und eine graphische Darstellung der aufbereiteten Daten auf dem Bildschirm eines Computers.

Gemäß einer bevorzugten Ausführungsform der vorliegenden Erfindung wird vorgeschlagen, dass das Intelligente Netz Mittel zur Aufzeichnung der Kommunikation zwischen dem Endgerät und der Steuereinrichtung für die Gebäudefunktion aufweist. Die Aufzeichnung der Kommunikation kann zu Dokumentationszwecken, zu Prüfzwecken oder nach dem Auftreten eines Fehlers zu Diagnosezwecken erfolgen.

Vorteilhafterweise weist das Intelligente Netz Mittel zur Identifikation und/oder Authentizierung des Teilnehmers auf. Die Identifikation und Authentizierung wurde nach dem Stand der Technik bisher von der Steuereinrichtung für die Gebäudefunktion ausgeführt. Durch die Verlagerung dieser Funktion auf das Intelligente Netz kann zum einen die Steuereinrichtung entlastet und zum anderen können die Identifikations- und Authentizierungsfunktionen erheblich verbessert und erweitert werden. Auf dem Server und der intelligen Peripherie des Intelligenten Netzes stehen wesentlich mehr Resourcen zur Verfügung, um eine besonders sichere und zuverlässige Identifikation und/oder Authentisierung des Teilnehmers durchzuführen. Erst nach erfolgreicher Identifikation und Authentizierung des Teilnehmers stellt das Intelligente Netz dann die Kommunikationsverbindung zwischen dem Endgerät und der Steuereinrichtung für die Gebäudefunktion her.

Das Telekommunikationsnetz ist vorteilhafterweise als ein digitales Telekommunikationsnetz mit digitalen Endgeräten, insbesondere als ein Integrated-Services-Digital-Network (ISDN), ausgebildet.

Das Telekommunikationsnetz oder das weitere Telekommunikationsnetz ist vorzugsweise als das Internet, ein Intranet, ein Mobilfunknetz, ein Integrated-Services-Digital-Network (ISDN), ein analoges Telefonnetz oder ein Funkrufdienstnetz ausgebildet. Über ein Funkrufdienstnetz (z. B. Eurosignal von der CEPT (Vereingung der europäischen Telefon- und Postverwaltungen), Ermes (European Radio Message System) oder Scall) können Daten in eine Richtung ohne Rückmeldung an geeignete Endgeräte (z. B. Europiepser, Pager) übermittelt werden. Aus dieser Vielfalt von Telekommunikationsnetzen kann gemäß der vorliegenden Erfindung von entsprechenden Endgeräten aus über das Intelligente Netz auf die Steuereinrichtung für die Gebäudefunktion zugegriffen werden.

Zur Lösung der Aufgabe der vorliegenen Erfindung wird ausgehend von dem Verfahren zur Fernabfrage und/oder Fernsteuerung der eingangs genannten Art des Weiteren vorgeschlagen, dass eine Kommunikationsverbindung zwischen dem Endgerät und einer Steuereinrichtung für die Gebäudefunktion über ein Intelligentes Netz aufgebaut wird, wobei Daten für die Fernabfrage und/oder Fernsteuerung der Gebäudefunktion über die Kommunikationsverbindung übermittelt werden.

Die vorliegende Erfindung betrifft auch eine besonders vorteilhafte Verwendung eines Intelligenten Netzes zur Fernabfrage und/oder Fernsteuerung einer Gebäudefunktion. Die Fernabfrage bzw. Fernsteuerung erfolgt durch einen Teilnehmer von einem Endgerät aus über ein Telekommunikationsnetz. Dabei ist das Endgerät Teil eines beliebigen Telekommunikationsnetzes. Das Intelligente Netz veranlasst den Aufbau einer Kommunikationsverbindung zwischen dem Endgerät und einer Steuereinrichtung für die Gebäudefunktion. Daten für die Fernabfrage und/oder Fernsteuerung der Gebäudefunktion werden über die Kommunikationsverbindung übermittelt.

Ein bevorzugtes Ausführungsbeispiel der vorliegenden Erfindung wird im Folgenden anhand der Zeichnung näher erläutert. Es zeigt:

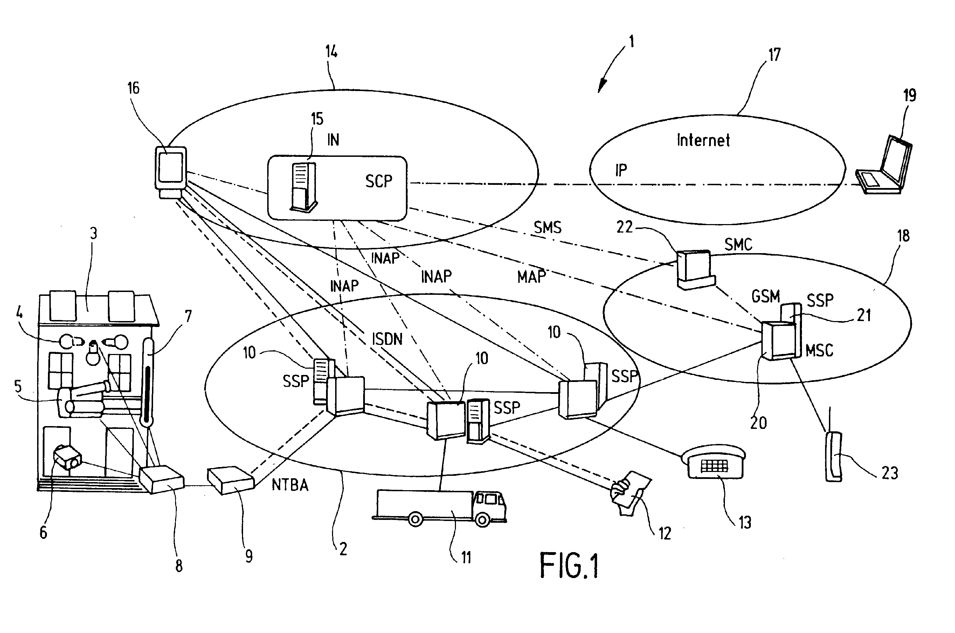

- Figur 1: eine erfindungsgemäß Vorrichtung gemäß einer bevorzugten Ausführungsform.

In Figur 1 ist eine erfindungsgemäße Vorrichtung zur Fernabfrage und/oder Fernsteuerung einer Gebäudefunktion in ihrer Gesamtheit mit dem Bezugszeichen 1 bezeichnet. Die Fernabfrage bzw. Fernsteuerung erfolgt durch einen Teilnehmer von einem Endgerät aus über ein Telekommunikationsnetz 2. Das Telekommunikationsnetz 2 ist als ein digitales Telekommunikationsnetz mit vorzugsweise digitalen Endgeräten, insbesondere als ein Integrated-Services-Digital-Network (ISDN) ausgebildet. Das Gebäude, in dem auf bestimmte Gebäudefunktionen über Fernabfrage und/oder Fernsteuerung zugegriffen werden kann, ist mit dem Bezugszeichen 3 bezeichnet. Als mögliche Gebäudefunktionen sind in Figur 1 beispielhaft eine Beleuchtung 4, eine Videoüberwachung 5, eine Alarmanlage 6 und eine Außentemperaturmessung 7 dargestellt. Die einzelnen Gebäudefunktionen 4, 5, 6, 7 werden mittels einer Steuereinrichtung 8 koordiniert. Diese Art der Koordination verschiedener Gebäudefunktionen durch eine Steuereinrichtung ist auch unter dem Schlagwort "Gebäudemanagement" bekannt. Die Steuereinrichtung 8 ist über einen sogenannten Network-Termination-Basic-Access (NTBA) 9 wie ein herkömmliches Endgerät an das Telekommunikationsnetz 2 angeschlossen. Die Kommunikation in dem Gebäude 3 von den Gebäudefunktionen 4, 5, 6, 7, über die Steuereinrichtung 8 bis zu dem NTBA 9 erfolgt über einen anwendungsspezifischen Standard (dünne durchgezogene Linien in Figur 1), der abhängig ist von dem für das Gebäudemanagement verwendeten Standard.

In dem Telekommunikationsnetz 2 sind beispielhaft drei als Service-Switching-Points (SSP) 10 bezeichnete Vermittlungsstellen angeordnet, über die verschiedene Endgeräte an das Telekommunikationsnetz 2 angeschlossen sind. Als an das Telekommunikationsnetz 2 angeschlossene Endgeräte sind in Figur 1 beispielhaft eine Notrufzentrale 11, ein sogenannter Personal-Digial-Assistent (PDA) 12 und ein Telefon (analog oder digital) 13 dargestellt. Die dicken durchgezogenen Linien von und zu dem Telekommunikationsnetz 2 stellen die B-Kanäle des ISDN und die gestrichelten Linien den D-Kanal des ISDN dar. Die gestrichpunkteten Linien stehen für sonstige Kommunikationsverbindungen (z. B. Signalisierung).

Mit dem Telekommunikationsnetz 2 steht ein sogenanntes Intelligentes Netz (IN) 14 in Verbindung. Ein Intelligentes Netz ist einem analogen oder digitalen Telekommunikationsnetz übergeordnet. Das Intelligente Netz 14 weist einen als Service-Control-Point (SCP) bezeichneten Server 15 und eine sogenannte Intelligente Peripherie (Intelligent Peripheral) 15 auf, die Teilaufgaben des Intelligenten Netzes 14 übernimmt. Die Steuereinrichtung 8 initiiert einen Anruf woraufhin der mit dem Intelligenten Netz 14 in Verbindung stehende SSP 10 des Telekommunikationsnetzes 2 den Aufbau der Kommunikationsverbindung an den Server 15 übergibt. Dieser verarbeitet den Anruf derart, dass beim Auftreten bestimmter Ereignisse bestimmte Handlungen ausgeführt werden. Stellt der Server 15 fest, dass der Anruf weitergeleitet werden muss, teilt er dies zusammen mit der umgewerteten Rufnummer dem SSP 10 mit. Der Anruf wird dann von dort aus weiter aufgebaut. Die Kommunikation zwischen den SSP 10 des Telekommunikationsnetzes 2 und dem Server 15 des Intelligenten Netzes 14 erfolgt nach dem Intelligent-Net-Application-Protocol (INAP).

Mit dem Intelligenten Netz 14 stehen weitere Telekommunikationsnetze in Verbindung, von denen in Figur 1 beispielhaft das Internet 17 und ein Mobilfunknetz 18 dargestellt sind. Über das Internet 17 kann von einem geeigneten Endgerät 19 aus, das als ein Laptop 19 ausgebildet ist, eine Kommunikationsverbindung zu dem Server 15 des intelligen Netzes 14 aufgebaut werden. Über diese Kommunikationsverbindung werden die zu übertragenden Daten nach dem sogenannten Internet-Protocol (IP) übertragen. Das Mobilfunknetz 18 arbeitet nach der Global-Systems-For-Mobile-Communications (GSM) -Norm.

In dem Mobilfunknetz 18 ist ein als Mobile-Switching-Center (MSC) bezeichneter Server 20, ein Service-Switching-Point (SSP) 21 und ein Short-Message-Center (SMC) 22 angeordnet. Von einem geeigneten Endgerät 23 aus, das als ein Mobiltelefon ausgebildet ist, kann über das Mobilfunknetz 18 eine Kommunikationsverbindung zu dem Server 15 des Intelligenten Netzes 14 aufgebaut werden. Zwischen dem Server 15 und dem Server 21 erfolgt die Datenübertragung nach dem Mobile-Application-Protocol (MAP), dem Signalisierungsprotokoll von GSM-Netzen, oder als Kurznachricht (Short-Message-Service, SMS) zum Endgerät 23.

Auf den Endgeräten 11, 12, 13, 19, 23 der unterschiedlichen Telekommunikationsnetze 2, 17, 18 sind Anwendungen vorhanden, die Daten an die Gebäudefunktionen 4, 5, 6, 7 abgeben und Daten von den Gebäudefunktionen 4, 5, 6, 7 aus dem Gebäude 3 darstellen können. Bei einem Telefon 13 erfolgt die Datenausgabe bspw. per Sprache und die Dateneingabe per Sprache oder über das Mehrfrequenzwahlverfahren (Dial-Tone-Multiple-Frequence, DTMF). Bei einem PDA 12 oder einem Laptop 19 kann die Datenausgabe dagegen graphisch auf einem Bildschirm und die Dateneingabe über eine auf dem Bildschirm dargestellte benutzerfreundliche Menüstruktur über eine Tastatur, eine Maus oder andere Eingabemittel erfolgen.

Die verschiedenen Gebäudefunktionen 4, 5, 6, 7 des Gebäudes 3 und die Endgeräte 11, 12, 13, 19, 23 sind über herkömmliche Telekommunikationsnetze - das Internet 17 oder das Mobilfunknetz 18 -, das Intelligente Netz 14 und das ISDN 2 physikalisch miteinander vernetzt. Zur Koordinierung der Kommunikation und für die Implementierung von kommunikationsrelevanten Teilen der Anwendungen des Gebäudemanagements werden die Strukturen und Mechanismen des Intelligenten Netzes 14 verwendet. Die Aufgaben des Intelligenten Netzes 14 umfassen insbesondere:
- Den Aufbau einer Kommunikationsverbindung zwischen einem Endgerät 11, 12, 13, 19, 23 und der Steuereinrichtung 8 für die Gebäudefunktionen 4, 5, 6, 7 über die heterogene Telekommunikationsnetz-Struktur.
- Aufzeichnung der Kommunikation zwischen einem Endgerät 11, 12, 13, 19, 23 und der Steuereinrichtung 8 für die Gebäudefunktionen 4, 5, 6, 7.
- Verwaltung des von dem Teilnehmer derzeit benutzten Telekommunikationsnetzes 2, 17, 18 und der Adresse (z.B. IP-Adresse oder Telefonnummer), unter der der Teilnehmer derzeit erreichbar ist.
- Identifikation und/oder Authentizierung des Teilnehmers.
- Konvertierung der zwischen einem Endgerät 11, 12, 13, 19, 23 und der Steuereinrichtung 8 der Gebäudefunktionen 4, 5, 6, 7 übertragenen Daten zwischen einem Datenformat der Steuereinrichtung 8 und einem Datenformat des Endgeräts 11, 12, 13, 19, 23.

Befindet sich ein Teilnehmer bspw. mit einem Mobilfunk-Endgerät 23 im Bereich des Mobilfunknetzes 18 und nutzt er für die Kommunikation mit den Gebäudefunktionen 4, 5, 6, 7 des Gebäudes 3 den SMS-Dienst des Mobilfunknetzes 18, verfasst er zur Fernabfrage von Gebäudefunktionen 4, 5, 6, 7 eine Kurznachricht (SMS) in einem vorgegebenen Datenformat. Die Kurznachricht wird über das Short Message Center (SMC) 22 an den Server 15 des Intelligenten Netzes 14 weitergeleitet. In dem Server 15 oder in der Intelligenten Peripherie 16 wird eine mittels ISDN übertragbare und für die Steuereinrichtung 8 der Gebäudefunktionen 4, 5, 6, 7 auswertbare Befehlsfolge erzeugt. Von der Intelligenten Peripherie 16 wird dann eine Kommunikationsverbindung zu dem NTBA 9 des Gebäudes 3 aufgebaut und die Befehlsfolge zu der Steuereinrichtung 8 übertragen. Dies erfolgt vorteilhafter Weise über einen B-Kanal des ISDN. Die Steuereinrichtung 8 empfängt die Befehlsfolge, arbeitet sie ab und veranlasst die Gebäudefunktionen 4, 5, 6, 7 die entsprechenden Handlungen vorzunehmen. Falls gefordert, sendet die Steuereinrichtung 8 das Ergebnis einer Abfrage einer Gebäudefunktion 4, 5, 6, 7 über das Telekommunikationsnetz 2 wieder zurück an das Intelligente Netz 14. Dort wird das Abfrageergebnis aufbereitet, an das Mobilfunk-Endgerät 23 des Teilnehmers übermittelt und dort in einer für den Teilnehmer übersichtlichen und bequemen Weise ausgegeben. Dies kann bspw. eine graphische Präsentation des Abfrageergebnisses auf einem Bildschirm des Mobilfunk-Endgeräts 23 (als SMS-Kurznachricht) sein.

Falls bspw. in dem Gebäude 3 die Gebäudeüberwachung 5 aktiviet ist und ein Eindringling detektiert wird, setzt die Steuereinrichtung 8 einen entsprechenden Alarmruf an eine Notrufzentrale 11 ab. Dazu tätigt die Steuereinrichtung 8 einen Anruf. Der SSP 10 erkennt, dass der Anruf von der Steuereinrichtung 8 initiiert wurde und übergibt den Verbindungsaufbau an den Server 15 des Intelligenten Netzes 14. Die Steuereinrichtung 8 übermittelt Daten mit dem Hinweis auf einen Eindringling in dem Gebäude 3 an den SSP 10, welche die für das Intelligente Netz relevante Daten an den Server 15 weiterleitet. In Abhängigkeit der Daten veranlasst der Server 15 bestimmte Handlungen, im vorliegenden Beispiel den Aufbau einer Kommunikationsverbindung zu der Notrufzentrale 11 über den SSP 10.

Darüber hinaus bereitet der Server 15 die Daten in einer Weise auf, dass der Notrufzentrale 11 sämtliche notwendigen Informationen möglichst umfassend, bequem und übersichtlich präsentiert werden. So kann bspw. zusätzlich zu dem Hinweis auf einen Eindringling in dem Gebäude 3 auch noch der Zustand von in dem Gebäude 3 verteilten Bewegungsmeldern oder der aktuelle Aufenthaltsort des Besitzers des Gebäudes 3 (der hier als Teilnehmer bezeichnet wird) hinzugefügt werden. Es wäre auch denkbar, Aufnahmen des Eindringlings von der Videoüberwachung 5 in dem Gebäude 3 an die Notrufzentrale 11 zu übermitteln. Eine entsprechende aufbereitete Alarmmeldung wird aus dem Intelligenten Netz 14 über das Telekommunikationsnetz 2 an die Notrufzentrale 11 übermittelt.

Zusätzlich kann das Intelligente Netz 14 veranlassen, dass der Teilnehmer über den Eindringling informiert wird. Dazu muss festgestellt werden, in welchem Telekommunikationsnetz 2, 17, 18 sich der Teilnehmer befindet und unter welcher Adresse (IP-Adresse, Telefonnummer) er erreichbar ist. Ggf. muss die Alarmmeldung in ein geeignetes Datenformat übersetzt werden, bevor sie an das Endgerät 12, 13, 19, 23 des Teilnehmers weitergeleitet werden kann.

## Patentansprüche

1. Vorrichtung (1) zur Fernabfrage und/oder Fernsteuerung einer Gebäudefunktion (4, 5, 6, 7) durch einen Teilnehmer von einem Endgerät (11, 12, 13) aus über ein Telekommunikationsnetz (2), **dadurch gekennzeichnet,** dass das Telekommunikationsnetz (2) einerseits mit einem Intelligenten Netz (14) und andererseits mit einer Steuereinrichtung (8) für die Gebäudefunktion (4, 5, 6, 7) in Verbindung steht.

2. Vorrichtung (1) nach Anspruch 1, **dadurch gekennzeichnet**, dass das Intelligente Netz (14) mit weiteren Telekommunikationsnetzen (17, 18) mit weiteren Endgeräten (19, 23) zur Fernabfrage und/oder Fernsteuerung der Gebäudefunktion (4, 5, 6, 7) in Verbindung steht.

3. Vorrichtung (1) nach Anspruch 1 oder 2, **dadurch gekennzeichnet**, dass das Intelligente Netz (14) den Aufbau einer Kommunikationsverbindung zwischen dem Endgerät (11, 12, 13, 19, 23) und der Steuereinrichtung (8) für die Gebäudefunktion (4, 5, 6, 7) über die heterogene Telekommunikationsnetz-Struktur veranlasst.

4. Vorrichtung (1) nach einem der Ansprüche 1 bis 3, **dadurch gekennzeichnet**, dass das Intelligente Netz (14) Mittel zum Verwalten des von dem Teilnehmer derzeit benutzten Telekommunikationsnetzes (2, 17, 18) und zum Verwalten der Adresse aufweist, unter der der Teilnehmer derzeit erreichbar ist.

5. Vorrichtung (1) nach einem der Ansprüche 1 bis 4, **dadurch gekennzeichnet**, dass das Intelligente Netz (14) Mittel zur Konvertierung der zwischen dem Endgerät (11, 12, 13, 19, 23) und der Steuereinrichtung (8) der Gebäudefunktion (4, 5, 6, 7) übertragenen Daten zwischen einem Datenformat der Steuereinrichtung (8) und einem Datenformat des Endgeräts (11, 12, 13, 19, 23) aufweist.

6. Vorrichtung (1) nach einem der Ansprüche 1 bis 5, **dadurch gekennzeichnet**, dass das Intelligente Netz (14) Mittel zur Aufzeichnung der Kommunikation zwischen dem Endgerät (11, 12, 13, 19, 23) und der Steuereinrichtung (8) für die Gebäudefunktion (4, 5, 6, 7) aufweist.

7. Vorrichtung (1) nach einem der Ansprüche 1 bis 6, **dadurch gekennzeichnet**, dass das Intelligente Netz (14) Mittel zur Identifikation und/oder Authentizierung des Teilnehmers aufweist.

8. Vorrichtung (1) nach einem der Ansprüche 1 bis 7, **dadurch gekennzeichnet**, dass das Telekommunikationsnetz (2) als ein digitales Telefonnetz mit digitalen Endgeräten (12, 13, 19, 23), insbesondere als ein Integrated-Services-Digital-Network (ISDN), ausgebildet ist.

9. Vorrichtung (1) nach einem der Ansprüche 1 bis 7, **dadurch gekennzeichnet**, dass das Telekommunikationsnetz (2) oder das weitere Telekommunikationsnetz (17, 18) als das Internet (17), ein Intranet, ein Mobilfunknetz (18), ein Integrated-Services-Digital-Network (ISDN) (2), ein analoges Telefonnetz oder ein Funkrufdienstnetz ausgebildet ist.

10. Verfahren zur Fernabfrage und/oder Fernsteuerung einer Gebäudefunktion (4, 5, 6, 7) durch einen Teilnehmer von einem Endgerät (11, 12, 13) aus über ein Telekommunikationsnetz (2), insbesondere mittels einer Vorrichtung (1) gemäß einem der vorangehenden Ansprüche, **dadurch gekennzeichnet,** dass der Aufbau einer Kommunikationsverbindung zwischen dem Endgerät (11, 12, 13) und einer Steuereinrichtung (8) für die Gebäudefunktion (4, 5, 6, 7) von einem dem Telekommunikationsnetz übergeordneten Intelligenten Netz (14) veranlasst wird, wobei Daten für die Fernabfrage und/oder Fernsteuerung der Gebäudefunktion (4, 5, 6, 7) über die Kommunikationsverbindung übermittelt werden.

11. Verfahren nach Anspruch 10, **dadurch gekennzeichnet**, dass der Aufbau einer Kommunikationsverbindung zwischen einem weiteren Endgerät (19, 23) eines weiteren, mit dem Intelligenten Netz (4) in Verbindung stehenden Telekommunikationsnetzes (17, 18) und der Steuereinrichtung (8) von dem Intelligenten Netz (14) veranlasst wird.

12. Verfahren nach Anspruch 10 oder 11, **dadurch gekennzeichnet**, dass das von dem Teilnehmer derzeit benutzte Telekommunikationsnetz (2, 17, 18) und die Adresse, unter der der Teilnehmer derzeit erreichbar ist, von dem Intelligenten Netz (14) verwaltet wird.

13. Verfahren nach einem der Ansprüche 10 bis 12, **dadurch gekennzeichnet**, dass zwischen dem Endgerät (11, 12, 13, 19, 23) und der Steuereinrichtung (8) der Gebäudefunktion (4, 5, 6, 7) übertragene Daten zwischen einem Datenformat der Steuereinrichtung (8) und einem Datenformat des Endgeräts (11, 12, 13, 19, 23) von dem Intelligenten Netz (14) konvertiert werden.

14. Verwendung eines Intelligenten Netzes (14) zur Fernabfrage und/oder Fernsteuerung einer Gebäudefunktion (4, 5, 6, 7) durch einen Teilnehmer von einem Endgerät (11, 12, 13, 19, 23) aus über mindestens ein Telekommunikationsnetz (2, 17, 18), wobei die Telekommunikationsnetze (2, 17, 18) mit dem Intelligenten Netz (14) in Verbindung stehen, wobei mindestens eines der Telekommunikationsnetze (2) mit einer Steuereinrichtung (8) für die Gebäudefunktion (4, 5, 6, 7) in Verbindung steht und wobei das Intelligente Netz (14) den Aufbau einer Kommunikationsverbindung zwischen dem Endgerät (11, 12, 13, 19, 23) und der Steuereinrichtung (8) veranlasst, über die Daten für die Fernabfrage und/oder Fernsteuerung der Gebäudefunktion (4, 5, 6, 7) übermittelt werden.
